# FASCICULE DE BREVET EUROPEEN

(11) **EP 1 020 637 B1**
(45) Date de publication et mention de la délivrance du brevet: **17.12.2003**
(21) Numéro de dépôt: 00400067.5
(22) Date de dépôt: 13.01.2000
(51) Int. Cl.: F02M 37/22, F02C 7/22

(54) **Circuit de carburant à filtre principal protégé**
Brennstoffkreislauf mit geschütztem Hauptstromfilter
Fuel circuit with protected main stream filter

(30) Priorité: 14.01.1999 FR 9900294
(43) Date de publication de la demande: 19.07.2000
(73) Titulaire: SNECMA MOTEURS, 75015 Paris (FR)
(72) Inventeur: Blot-Carretero, Marie-Trinité Rose, 77950 Maincy (FR); Brocard, Jean-Marie, 77950 Rubelles (FR)

(56) Documents cités:
- EP-A- 0 166 160
- GB-A- 2 259 587
- US-A- 4 741 152
- US-A- 4 899 535
- US-A- 5 203 174

## Description

### Domaine de l'invention

L'invention se situe dans le domaine des filtres pour carburants en particulier les filtres utilisés dans les circuits de carburant de moteurs d'avions. Elle concerne aussi les circuits de carburant utilisant de tels filtres.

### Art antérieur

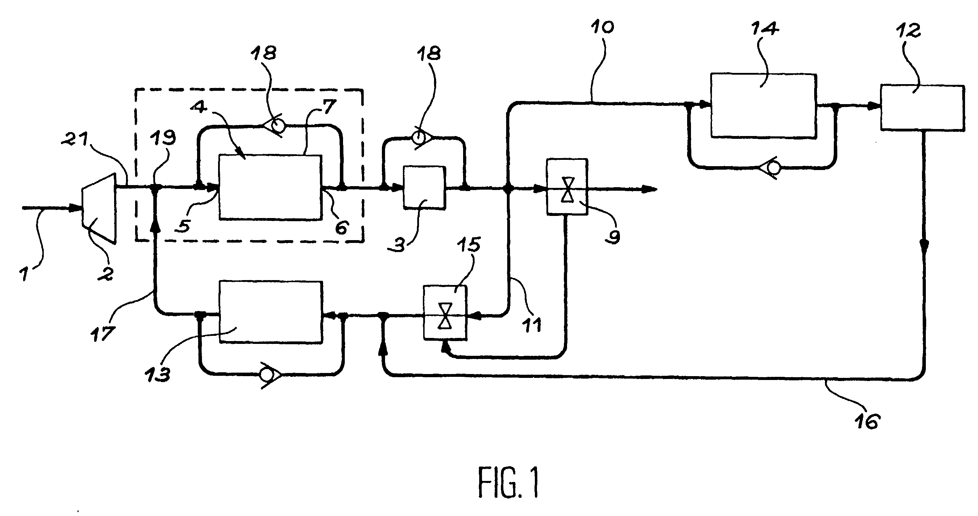

Les filtres, en particulier à carburant, sont connus depuis longtemps. Ils comportent une enceinte étanche, par exemple de forme cylindrique. Cette enceinte contient un élément filtrant. Une arrivée de carburant et un départ de carburant sont situés de part et d'autre de l'élément filtrant en sorte que le carburant sortant passe nécessairement à travers l'élément filtrant. Un exemple de circuit de carburant avion utilisant un tel filtre est représenté schématiquement figure 1.

Le carburant en provenance d'un réservoir non représenté est amené par une tuyauterie 1 vers une pompe basse pression 2 qui est une pompe de gavage pour une pompe principale 3 située en aval dans le circuit. Un filtre principal 4 reçoit le carburant en provenance de la pompe basse pression 2, d'une part et le carburant en provenance de circuits de retour qui seront décrits ultérieurement. Le filtre 4 comprend, de façon connue comme expliqué ci-dessus, une entrée de carburant 5, si tuée du coté amont, une sortie de carburant 6 située du coté aval, et une enceinte étanche 7 délimitée par une enveloppe 40. De façon connue et non représenté sur la figure 1, le filtre principal 4 comporte un élément filtrant 8. En sortie de la pompe principale 3, le carburant passe au travers d'un doseur 9. Le doseur 9 qui est servo-commandé ne laisse passer que la quantité de carburant qui est nécessaire au fonctionnement des moteurs compte tenu du régime de vol. Des déviations 10, 11 situées en amont du doseur 9 et en aval de la pompe principale 3, dirigent le carburant d'une part vers des servomécanismes 12 qui utilisent, pour leur fonctionnement, la pression du carburant obtenue à partir de la pompe principale 3, et d'autre part vers un échangeur thermique 13 au travers d'une soupape régulatrice 15.

Pour les explications qui vont suivre, il est maintenant nécessaire de donner quelques indications quant aux températures du carburant. Des températures en degrés Celcius correspondant à une température extérieure basse limite pour un carburant de type A1 sont données à titre indicatif pour différents endroits du circuit représenté en figure 1. Le carburant dans le réservoir est en cours de vol sensiblement à la température extérieure à l'altitude du vol, par exemple et comme représenté figure 1 à - 54°. Cette basse température pourrait compromettre le bon fonctionnement des servomécanismes 12, et c'est pourquoi un moyen de réchauffage du carburant 14, est prévu en amont des servomécanismes 12. Par contre cette basse température est aussi utilisée de façon avantageuse pour refroidir divers moyens de fonctionnement de l'avion et en particulier des moteurs. Ce refroidissement est effectué au moyen de l'échangeur thermique principal 13 dont il a été parlé plus haut. Le carburant en sortie des servomécanismes 12 est ramené par une tuyauterie 16 en amont de l'échangeur thermique principal 13, où il est introduit avec le carburant en sortie de la soupape régulatrice 15. En sortie de l'échangeur thermique principal 13, le carburant se trouve pour l'exemple de conditions de la figure 1, à une température d'environ 7°. Ce carburant est amené en aval de la pompe basse pression 2, et en amont du filtre principal 4, par une tuyauterie 17, constituant l'extrémité aval du circuit de retour dont il a été parlé plus haut. Ce circuit de retour comprend la tuyauterie 16 en aval du servomécanisme 12, la déviation 11 menant à la soupape régulatrice 15 et le circuit de l'échangeur principal 13 terminé par la tuyauterie 17. Compte tenu des débits de carburant dans les divers éléments du circuit qui vient d'être décrit et des conditions de fonctionnement relatives à l'exemple choisi, la température du carburant à l'entrée du filtre principal 4 est d'environ - 17°. On comprend cependant que de larges fluctuations de cette température ne sont pas exclues puisqu'il s'agit d'une température résultant d'un mélange entre d'une part, le carburant provenant du réservoir dont la température dépend des conditions initiales de vol, du temps de vol, et des températures extérieures rencontrées, et d'autre part le carburant en provenance du circuit de retour dont la température dépend du temps de vol, et des températures extérieures rencontrées, mais aussi des débits nécessaires aux moteurs, aux servomécanismes, et des échanges thermiques avec les organes refroidis. Il est ainsi possible que le carburant à l'entrée du filtre principal 4, du circuit de carburant présente des températures voisines ou égales à - 2° ou encore - 9° qui sont des températures propices aux formations de paillettes de givre qui encrassent rapidement l'élément filtrant 8 du filtre 4 jusqu'à l'obturer. Une détection de ce phénomène entraîne l'ouverture d'un court-circuit 18 (by-pass) court-circuitant le filtre bouché. D'autres courts-circuits 18 court-circuitant d'autres éléments du circuit de carburant ont été représentés figure 1 mais ne seront pas commentés car non nécessaires à la compréhension de l'invention. En cas de givrage du filtre 4, le carburant continue à circuler au travers du court-circuit 18, et en particulier à alimenter les injecteurs des moteurs, mais il n'est plus filtré et l'on court le risque d'encrasser voir de boucher un ou plusieurs injecteurs ce qui perturbe le fonctionnement des moteurs. Il convient de noter que le circuit qui vient d'être décrit en liaison avec la figure 1 est un exemple générique de circuit récent et qu'il en existe pratiquement autant de variantes que de moteurs. De plus, la description qui a été faite est succincte, et uniquement destinée à faire comprendre que pour diverses raisons la température du carburant est variable en fonction des parties de circuit dans lesquelles le carburant se trouve. Il a existé dans le passé, des turbomachines comportant des circuits régulés de réchauffage carburant pour obtenir un carburant à une température ne permettant pas le givrage. Ces circuits régulés sont coûteux à l'installation et leur fonctionnement est énergivore. Le filtre selon l'invention a pour objet de diminuer la probabilité d'occurrence de bouchage ou d'obturation partielle du filtre principal d'un circuit de carburant par givrage. Cette diminution de probabilité est obtenue sans dispositif coûteux ou encombrant et sans complication du circuit.

On connaît par EP 0 166 160 A un filtre à gasoil où le carburant provenant d'un réservoir entre par une entrée et en sort par une sortie, tandis qu'une seconde entrée du filtre reçoit du carburant chaud en provenance d'une pompe à haute pression. Ce carburant chaud entre dans une chambre intermédiaire du filtre équipée d'équipements de régularisation en température. Le carburant chaud est introduit en plus ou moins grande quantité par l'intermédiaire d'un clapet anti-retour et se mélange au carburant froid en provenance du réservoir.

US 4 899 535 A décrit un circuit de carburant d'avion dans lequel un filtre ne comportant qu'une seule entrée reçoit un débit de carburant résultant d'un mélange de carburant provenant du réservoir et d'un carburant dérivé du circuit.

### Brève description de l'invention

Ainsi, le filtre selon l'invention, est un filtre pour circuit de carburant ayant une enceinte étanche formée par une enveloppe contenant un élément filtrant, une sortie de carburant disposée en sorte que le carburant entrant dans l'enceinte étanche ne peut atteindre la sortie qu'au travers de l'élément filtrant, filtre comportent deux entrées, une première et une seconde formées par des ouvertures de l'enveloppe, ces deux entrées débouchant directement dans l'enceinte contenant l'élément filtrant.

Dans un circuit comportant un filtre selon l'invention, la première entrée sera réservée par exemple au carburant n'ayant subi aucun traitement thermique et arrivant du réservoir. La seconde entrée sera réservée au carburant ayant subi un réchauffement et arrivant par un circuit de retour. Ainsi l'élément filtrant reçoit directement d'un côté un carburant "chaud" qui ne comporte pas de risque de gel, et de l'autre côté un carburant froid, qui la plupart du temps se trouve à une température inférieure à - 9°, c'est-à-dire à une température inférieure à la température à laquelle l'eau contenue dans le carburant peut givrer sous forme de paillettes entraînant rapidement l'obturation du filtre. Les carburants chaud et froid sont introduits directement dans l'enceinte contenant l'élément filtrant de façon à ne pas favoriser un mélange préalable des carburants chaud et froid. Les mélanges entre carburant froid et carburant chaud engendrés par les turbulences au moment de l'entrée dans le filtre sont instables en sorte que s'il y a un début de givrage en un endroit de l'élément filtrant, on peut raisonnablement espérer que ces conditions de givrage seront elles-mêmes instables et que le givrage ne se poursuivra pas. Par ailleurs, si le carburant froid se trouve à une température rendant possible le givrage, le filtre au lieu de se givrer en masse sur toute sa surface, aura une zone froide qui givrera et colmatera en premier et une zone chaude qui givrera en dernier. La double entrée, chaude et froide, rend possible un certain contrôle, une certaine orientation du mécanisme de givrage de la surface de l'élément filtrant conduisant à allonger le temps de fonctionnement sans ouverture du court-circuit. Ceci est dû au fait que la perte de charge au niveau du filtre reste suffisamment faible parce qu'une portion de la surface filtrante reste exempte de givre.

Un filtre selon l'invention est caractérisé en ce qu'il comporte à l'intérieur de l'enceinte étanche des cloisons séparatrices gênant le mélange entre le carburant froid arrivant sur une entrée et le carburant chaud arrivant sur l'autre entrée. On augmente ainsi la ségrégation entre carburant froid et carburant chaud.

### Brève description des dessins

Un exemple de réalisation d'un filtre selon l'invention sera décrit ci après en liaison avec les dessins annexés dans lesquels:
- la figure 1 déjà décrite représente un exemple de schéma d'un circuit de carburant connu comportant un filtre connu ;
- la figure 2 est une vue en coupe longitudinale selon IV-IV de la figure 3 d'un filtre à double entrée selon l'invention et faisant aussi apparaître la modification apportée à un circuit de carburant utilisant un filtre à double entrée selon l'invention ;
- la figure 3 est une vue en coupe transversale selon III-III de la figure 2 d'un filtre à double entrée selon l'invention ; et
- la figure 4 est une vue en coupe transversale selon III-III de la figure 2 d'un filtre à double entrée selon une variante de l'invention.

### Description de modes de réalisation de l'invention

Dans toutes les figures les éléments ayant même fonction portent le même numéro de référence. Des flèches indiquent le sens de circulation du carburant.

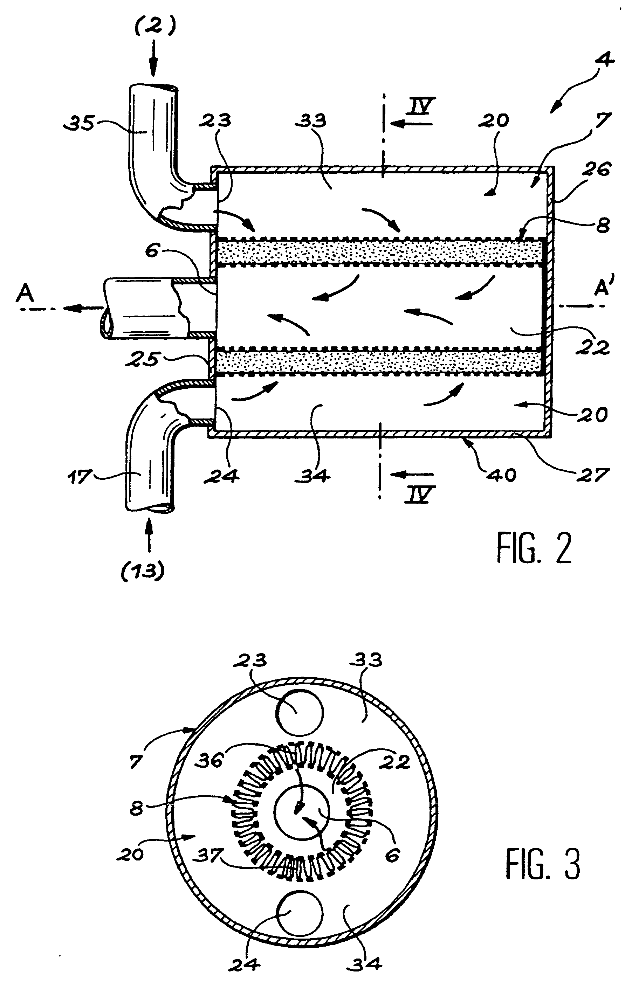

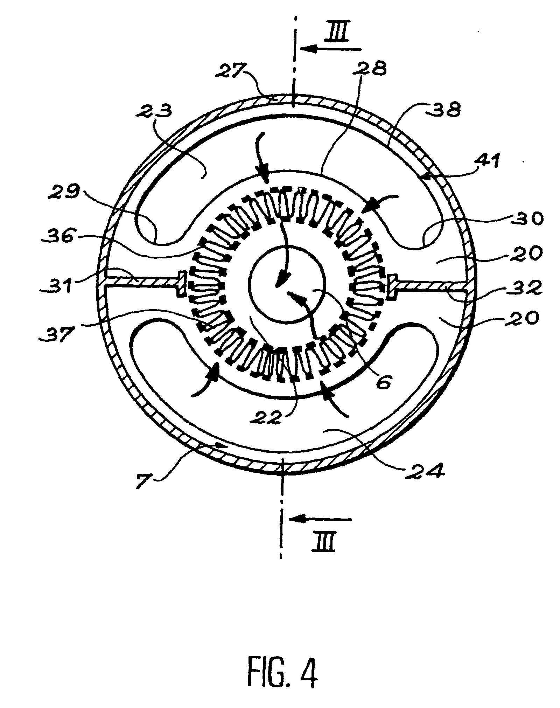

Les figures 2 et 3 sont des vues en coupe longitudinale et en coupe transversale respectivement, d'un filtre 4 à double entrée selon l'invention. Une première entrée 23 reçoit le carburant froid en provenance du réservoir, carburant n'ayant subi aucun traitement thermique. Une seconde entrée 24 reçoit le carburant du circuit de retour dont une partie au moins a fait l'objet d'une réchauffe, et qui pour cette raison est appelé le carburant chaud, bien que sa température reste basse, de l'ordre de la dizaine de degrés Celcius. Ces entrées 23, 24 introduisent le carburant dans une enceinte étanche 7 qui dans l'exemple représenté et sans que cela soit limitatif, est délimitée par une enveloppe 40 de forme cylindrique d'axe AA'. L'enceinte est donc délimitée par deux flasques transversaux 25, 26 et une virole 27 parallèle à l'axe AA' composant ensemble l'enveloppe 40. De façon avantageuse, au moins l'une des entrées 23, 24 est constituée par une ouverture 41, en forme de haricot, dans l'un ou l'autre des flasques 25, 26. Dans l'exemple représenté, l'ouverture 41 est délimitée d'une part, par deux arcs de cercle 28, 38 concentriques ayant chacun une extrémité, et d'autre part, par des courbes de raccordement 29, 30. Chacune des courbes de raccordement 29, 30 raccorde entre elles deux extrémités d'arcs de cercle 28, 38. De préférence, les arcs de cercle 28, 38 délimitant les haricots sont centrés sur l'axe AA'. Sur l'exemple représenté figure 3, les deux entrées 23, 24 ont une forme de haricot mais seules les limites de l'un des haricots ont été numérotées. L'enceinte 7 comporte de façon connue un élément filtrant 8. Cet élément filtrant 8 partage l'enceinte en deux volumes, un volume de réception 20 et un volume de sortie 22 . Les ouvertures d'entrée 23, 24 de l'enceinte 7 sont situées d'un même côté par rapport à l'élément filtrant 8, en sorte qu'elles débouchent dans le volume de réception 20. L'ouverture de sortie 6 se situe de l'autre côté de l'élément filtrant 8 en sorte qu'elle reçoit le carburant après passage à travers l'élément filtrant 8. Dans l'exemple représenté le volume de réception 20 se trouve à la périphérie de l'enceinte 7, et le volume de sortie 22 au centre. Les deux ouvertures d'entrée 23, 24 occupent des situations diamétralement opposées l'une à l'autre. De la sorte le carburant froid a tendance à rester dans la partie 33 de volume 20 de réception se trouvant du côté de la première entrée 23, tandis que le carburant chaud a tendance à rester dans la partie 34 de volume 20 de réception se trouvant du côté de la seconde entrée 24. Ainsi, en cas de conditions givrantes, seule la partie 36 de l'élément filtrant 8 se trouvant du côté de la première entrée 23 aura tendance à s'obstruer par dépôt de paillettes de givre. L'autre partie 37 de l'élément filtrant 8 qui reçoit le carburant chaud restera ouverte. De la sorte la perte de charge au niveau de l'élément filtrant 8 sera insuffisante pour provoquer l'ouverture du court-circuit du filtre. Afin de renforcer cette tendance à la ségrégation des carburants chaud et froid on peut de façon avantageuse et comme représenté figure 4 disposer des cloisons 31, 32 jaillissant de l'enveloppe 40, intérieurement dans le volume 20 entre les deux parties, 33 et 34. Les cloisons 31, 32 peuvent comme représenté figure 4, avoir une largeur égale à la distance comprise entre l'élément filtrant 8 et la surface latérale 27. Elles peuvent aussi avoir une largeur moindre et ne pas s'étendre sur toute la longueur axiale de l'enceinte 7 ou encore être ajourées. Les cloisons 31, 32 sont dans l'exemple représenté jaillissantes de façon diamétralement opposée de la virole 27.

La modification apportée au circuit pour l'utilisation d'un filtre conforme à l'invention sera maintenant commentée en liaison avec la figure 2. Tout d'abord il convient de noter qu'un filtre selon l'invention peut s'utiliser avec tout circuit dont les parties contiennent du carburant à des températures inégales entre elles. Il convient ensuite de noter que l'emploi d'un filtre conforme à l'invention ne perturbe que très peu l'arrangement général du circuit. Ainsi la figure 2 représente la modification apportée par l'utilisation d'un filtre selon l'invention à la partie de circuit entourée sur la figure 1 par une ligne pointillée. Sur la figure 1, on voit que la jonction entre le carburant froid dirigé vers l'entrée unique 5 du filtre 4, par une tuyauterie 21, s'effectue au niveau d'un raccord 19 de jonction de la tuyauterie 21, et de la tuyauterie 17 ramenant le carburant chaud dans le circuit principal de carburant. Ce raccord 19 se trouve en amont du filtre 4. Sur la figure 2 la seule modification apportée au circuit consiste à supprimer ce raccord de tuyauterie 19. La jonction des carburants chaud et froid ou plus généralement à des températures différentes l'une de l'autre, s'effectuant dans le filtre ou le carburant froid pénètre par l'entrée 23 alors que le carburant chaud pénètre par l'entrée 24. Ainsi, la première entrée 23 est connectée à une tuyauterie 35 en provenance de la pompe 2 puisant le carburant dans un réservoir de l'avion, la seconde entrée 24 étant connectée à la tuyauterie 17 raccordée à l'échangeur thermique 13 dans lequel le carburant a été utilisé comme fluide de refroidissement.

Il est insisté sur le fait que les modes de réalisation qui viennent d'être exposés en liaison avec les figures 2 à 4 ci-dessus ne sont que des exemples et que des réalisations conformes à l'invention peuvent s'accommoder de toute forme connue de filtre, qui pourra être modifiée pour introduire une entrée supplémentaire et éventuellement une ou plusieurs cloisons de ségrégation des carburants froid et chaud, cette cloison ou ces cloisons jaillissant de l'enveloppe vers l'intérieur de l'enveloppe entre les deux entrées 23, 24. Un tel filtre pourra être utilisé non seulement sur un circuit avion mais aussi sur d'autres dispositifs.

## Revendications

1. Filtre (4) pour circuit de carburant ayant une enceinte (7) étanche formée par une enveloppe (40) contenant un élément filtrant (8) une sortie (6) de carburant disposée en sorte que le carburant entrant dans l'enceinte étanche ne peut atteindre la sortie (6) qu'au travers de l'élément filtrant (8), filtre (4) comportent deux entrées (23, 24), une première (23) et seconde (24) ces deux entrées étant constituées par des ouvertures de l'enveloppe (40) formant l'enceinte (7) étanche, ces deux entrées (23,24) débouchant directement dans l'enceinte (7) contenant l'élément filtrant (8),
**caractérisé en ce que** l'enceinte (7) étanche contenant ledit élément filtrant (8) est formée par une enveloppe (40) munie d'ouvertures (23, 24) formant les entrées (23, 24) de l'enceinte (7), cette enveloppe (40) portant au moins une cloison (31, 32) jaillissant de l'enveloppe (40) entre les deux entrées (23, 24).

2. Filtre principal (4) selon la revendication 1, **caractérisé en ce que** ladite enveloppe (40) est de forme cylindrique d'axe AA' formée par une virole (27) axiale et deux flasques transversaux (25, 26).

3. Filtre principal (4) selon la revendication 2, **caractérisé en ce qu'**au moins l'une des ouvertures d'entrée (23, 24) a une forme de haricot.

4. Circuit de carburant d'avion, **caractérisé en ce qu'**il comporte au moins un filtre (4) selon l'une des revendications précédentes, la première entrée (23) recevant du carburant à une température différente de celle du carburant reçu par la seconde entrée (24).

5. Circuit de carburant d'avion selon la revendication 4, **caractérisé en ce que** la première entrée (23) est connectée à une tuyauterie (35) en provenance d'une pompe (2) puisant le carburant dans un réservoir de l'avion, la seconde entrée (24) étant connectée à une tuyauterie (17) recevant du carburant en provenance d'un échangeur thermique (13) dans lequel le carburant est un fluide de refroidissement.

## Claims

1. Filter (4) for a fuel circuit having a sealed chamber (7) formed of an envelope (40) containing a filter element (8), a fuel outlet (6) arranged in such a way that the fuel entering the sealed chamber can reach the outlet (6) only through the filter element (8), the filter (4) comprising two inlets (23, 24), a first (23) and a second (24), these two inlets consisting of openings in the envelope (40) forming the sealed chamber (7), these two inlets (23, 24) opening directly into the chamber (7) containing the filter element (8), **characterized in that** the sealed chamber (7) containing the said filter element (8) is formed of an envelope (40) equipped with openings (23, 24) forming the inlets (23, 24) of the chamber (7), this envelope (40) bearing at least one partition (31, 32) springing from the envelope (40) between the two inlets (23, 24).

2. Main filter (4) according to Claim 1, **characterized in that** the said envelope (40) is of cylindrical shape of axis AA' formed of an axial shell ring (27) and of two transverse end plates (25, 26).

3. Main filter (4) according to Claim 2, **characterized in that** at least one of the inlet openings (23, 24) is kidney bean shaped.

4. Aircraft fuel circuit, **characterized in that** it comprises at least one filter (4) according to one of the preceding claims, the first inlet (23) receiving fuel at a temperature different from that of the fuel received by the second inlet (24).

5. Aircraft fuel circuit according to Claim 4, **characterized in that** the first inlet (23) is connected to pipework (35) from a pump (2) drawing the fuel from a tank of the aircraft, the second inlet (24) being connected to pipework (17) receiving fuel from a heat exchanger (13) in which the fuel is a cooling fluid.

## Patentansprüche

1. Filter (4) für einen Brennstoffkreislauf mit einem dichten Raum (7), der von einem Mantel (40) gebildet wird, der ein Filterelement (8) enthält, wobei ein Brennstoffauslass (6) dergestalt angeordnet ist, dass der in den dichten Raum (7) eintretende Brennstoff den Auslass (6) nur durch das Filterelement (8) hindurch erreichen kann, wobei der Filter (4) zwei Einlässe (23, 24) aufweist, einen ersten (23) und einen zweiten (24), wobei diese zwei Einlässe aus Öffnungen in dem den dichten Raum (7) bildenden Mantel (40) bestehen, wobei diese zwei Einlässe (23, 24) direkt in den Raum (7) münden, der das Filterelement (8) enthält,
**dadurch gekennzeichnet,**
**dass** der dichte Raum (7), der dieses Filterelement (8) enthält, von einem Mantel (40) gebildet wird, der mit Öffnungen (23, 24) versehen ist, die die Einlässe (23, 24) des Raums (7) bilden, wobei dieser Mantel (40) mindestens eine Trennwand (31, 32) trägt, die zwischen den beiden Einlässen (23, 24) von dem Mantel (40) hervorsteht.

2. Hauptstromfilter (4) nach Anspruch 1,
**dadurch gekennzeichnet,**
**dass** dieser Mantel (40) eine zylindrische Form mit der Achse AA' aufweist, die von einem axialen Ring (27) und zwei quer liegenden Flanschen (25, 26) gebildet wird.

3. Hauptstromfilter (4) nach Anspruch 2,
**dadurch gekennzeichnet,**
**dass** mindestens eine der Einlassöffnungen (23, 24) eine Bohnenform aufweist.

4. Brennstoffkreislauf,
**dadurch gekennzeichnet,**
**dass** er mindestens ein Filter (4) gemäß einem der vorherigen Ansprüche enthält, wobei der erste Einlass (23) Brennstoff mit einer anderen Temperatur als der des von dem zweiten Einlass (24) aufgenommenen Brennstoffs aufnimmt.

5. Brennstoffkreislauf für Flugzeuge nach Anspruch 4,
**dadurch gekennzeichnet,**
**dass** der erste Einlass (23) mit einer Rohrleitung (35) verbunden ist, die von einer Pumpe (2) herführt, welche den Brennstoff aus einem Tank des Flugzeugs schöpft, wobei der zweite Einlass (24) mit einer Rohrleitung (17) verbunden ist, die Brennstoff aufnimmt, der von einem Wärmetauscher (13) kommt, in dem der Brennstoff ein Kühlfluid ist.
